# EUROPÄISCHE PATENTSCHRIFT

(11) **EP 0 970 321 B1**
(45) Veröffentlichungstag und Bekanntmachung des Hinweises auf die Patenterteilung: **07.02.2001**
(21) Anmeldenummer: 98917061.8
(22) Anmeldetag: 24.03.1998
(51) Int. Cl.: F16J 15/34

(54) **ABDICHTUNG**
SEALING ARRANGEMENT
DISPOSITIF D'ETANCHEITE

(30) Priorität: 25.03.1997 DE 19712480
(43) Veröffentlichungstag der Anmeldung: 12.01.2000
(73) Patentinhaber: Burgmann Dichtungswerke GmbH & Co. KG, 82515 Wolfratshausen (DE)
(72) Erfinder: REINFRANK, Ulrich, D-82544 Egling (DE); KACHLER, Peter, D-82049 Pullach (DE); GOERLITZ, Claudia, D-81479 München (DE); FEIGL, Peter, D-82335 Höhenrain (DE); ECKART, Jens, D-82515 Wolfratshausen (DE); SCHICKTANZ, Rudolf, D-82538 Geretsried (DE)
(74) Vertreter: COHAUSZ HANNIG DAWIDOWICZ & PARTNER
(86) Internationale Anmeldenummer: EP9801704
(87) Internationale Veröffentlichungsnummer: WO9843005

(56) Entgegenhaltungen:
- EP-A- 0 534 333
- EP-A- 0 684 412
- US-A- 4 335 888
- UNION CARBIDE: "UCAR Metal and Ceramic coatings" MACHINE DESIGN, Bd. 59, Nr. 13, 11.Juni 1987, CLEVELAND, Seiten 58-59, XP002070984

## Beschreibung

Die Erfindung betrifft eine Abdichtung der Antriebswelle eines CO₂-Kältemittelverdichters gegenüber dem ein CO₂-Ölgemisch enthaltenden Verdichtergehäuse mit einer Gleitringdichtung, die ein Paar Gleitringe aufweist, von denen einer drehfest am Verdichtergehäuse und der andere drehfest an der Antriebswelle montierbar ist, und deren zusammenwirkende Dichtflächen bei Betrieb zwischen sich einen Dichtspalt bilden. Die Erfindung betrifft ferner einen Kältemittelverdichter mit einer solchen Abdichtung.

Derartige Abdichtungen sind beispielsweise aus der EP-A-684412 bekannt. Sie können vorzugsweise für den Einsatz bei Aggregaten in einer Umgebung mit geringem Platzangebot, z.B. bei Klimageräten für Kraftfahrzeuge, Verwendung finden.

Bei derartigen Anwendungen werden vergleichsweise hohe Anforderungen an die Funktion der Gleitringdichtung gestellt, insbesondere wenn als Kältemittel aus Gründen der Umweltverträglichkeit CO₂ vorgesehen wird, was die Gleitringdichtung mit relativ hohen Betriebsdrücken von 40 bis 60 bar, bei intensiver Sonneneinstrahlung auch von bis zu 110 bar beaufschlagt. Das abzudichtende Medium ist dabei nicht reines CO₂ sondern ein Nebel aus einem CO₂/Öl-Gemisch mit variierenden Anteilen an flüssiger Phase. Für derartige Anwendungen wird z.B. eine höchstzulässige Leckage an Öl von maximal 1 g und an CO₂ von maximal 25 g über den Zeitraum eines Jahres gefordert.

Bei flüssigkeitsgeschmierten Gleitringdichtungen werden die beiden Gleitringe durch einen Flüssigkeitsfilm voneinander getrennt, wodurch eine vergleichsweise hohe Leckage bedingt ist. Dabei werden Hart-Weich-Werkstoffkombinationen der Gleitringe eingesetzt um bei dem Betrieb der Gleitringdichtung im Mischreibungs- bis Mangelschmierungsbereich die Notlaufeigenschaften eines weichen Materials wie Kohle zu erreichen.

Aus der US 4335888 ist eine Gleitringdichtung mit einer Hart-Hart-Werkstoffkombinationen bekannt. Der Einsatz derartiger Gleitringdichtungen ist bei abrasiven oder agressiven Medien bekannt. Auch ist es bei der Gleitringdichtung gemäß der US 4335888 wesentlich, daß die Dichtfläche eines Gleitrings im Querschnitt die Form einer scharfkantigen Ecke aufweist.

Aufgabe der Erfindung ist es, eine konstruktiv einfache und preiswert herzustellende und leicht zu montierende Abdichtung der eingangs genannten Art für einen Kältemittelverdichter zu schaffen, die auch bei sehr hohen Druckdifferenzen von mehr als 100 bar dauerhaft mit der geforderten Dichtigkeit abdichtet.

Diese Aufgabe wird erfindungsgemäß dadurch gelöst, daß beide Gleitringe aus Sinterhartmaterial gefertigt sind und daß das Verhältnis der Härte des einen Sinterhartmaterials zu der Härte des anderen Sinterhartmaterials zwischen etwa 1,8 und 1,4 beträgt.

Bei einfacher Konstruktion werden auf diese Weise auch bei sehr hohen Druckdifferenzen von bis zu 110 bar die zulässigen Leckagewerte dauerhaft eingehalten. Die Gleitringe sind durch Sintern einfach und preisgünstig herzustellen und die Gleitringdichtung ist schnell und einfach montierbar sowie demontierbar.

Dadurch daß beide Gleitringe aus Sinterhartmaterial gefertigt sind, können die Dichtflächen bei Betrieb des Kältemittelverdichters ständig im Mischreibungsbereich arbeiten.

Besonders gute Dichtigkeitswerte werden dann erhalten, wenn ein Gleitring aus einem Wolframkarbid(WC)-Sinterhartmaterial und der andere Gleitring aus einem Siliziumkarbid (SiC)-Sinterhartmaterial besteht.

Obwohl die Gründe hierfür im einzelnen noch nicht geklärt sind, wurde überraschend festgestellt, daß Gleitringdichtungen auf Basis einer derartigen Materialpaarung die geforderten Spezifikationen beim Einsatz in CO₂-Klimageräten, insbesondere hinsichtlich der Langzeitleckage, in überzeugender Weise erfüllen, ohne daß dieser Vorteil mit einer Komplizierung des Aufbaus der Dichtung verbunden ist.

Bei der Ausgestaltung insbesondere von hochdruckbelasteten Gleitringdichtungen war man dagegen bislang davon ausgegangen, daß einer der Gleitringe aus einem Kohlenstoffmaterial zu bestehen habe.

Besonders vorteilhaft ist es, wenn der rotierende Gleitring aus dem WC-Sinterhartmaterial gebildet ist. Es ist jedoch ebenfalls möglich, den mit dem stationären Gehäuse drehfest verbundenen Gleitring aus dem WC-Sinterhartmaterial zu bilden.

Bevorzugte Materialzusammensetzungen, mechanische Eigenschaften und Gefügeaufbaumerkmale der erfindungsgemäß eingesetzten Sinterhartmaterialien sind Gegenstand der Unteransprüche.

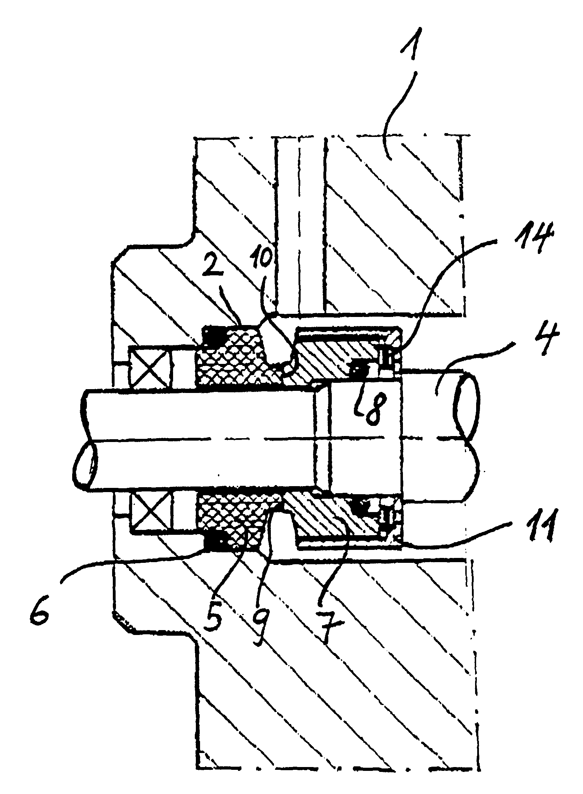

Die Erfindung wird nachfolgend anhand eines Ausführungsbeispiels und der Zeichnung näher erläutert.

Die Zeichnung zeigt in längsgeschnittener Ansicht eine erfindungsgemäß aufgebaute Gleitringdichtung nach Montage in einer Wellendurchtrittsbohrung eines Gehäuses.

Obwohl die Erfindung in Verbindung mit ihrer bevorzugten Anwendung bei einem CO₂-Verdichter zur Abdichtung einer Verdichterantriebswelle 4 gegenüber der Bohrung 2 eines Verdichtergehäuses 1 gezeigt ist und nachfolgend beschrieben wird, kann sie grundsätzlich vorteilhaft immer dann angewandt werden, wenn ein unter hohen Drücken stehendes, überwiegend gasförmiges Medium gegenüber z.B. der Außenumgebung mit extrem geringer Langzeitleckage in platzsparender Weise abgedichtet werden soll.

Die erfindungsgemäße Gleitringdichtung umfaßt, wie dargestellt, einen ersten Gleitring 5, der in nicht näher gezeigter Weise drehfest in der Bohrung 2 des Verdichtergehäuses 1 gehalten und dagegen durch einen O-Ring 6 abgedichtet ist. Ein dem drehfesten Gleitring 5 axial gegenüberliegender Gleitring 7 ist in einem mit der Welle 4 drehfest verbundenen Mitnehmergehäuse 11 aufgenommen, das den Gleitring 7 axial beweglich, jedoch gegen eine relative Verdrehung gesichert, hält, so daß dem Gleitring 7 die Drehung der Welle 4 aufgezwungen wird. Ein O-Ring 8 ist vorgesehen, um den Gleitring 7 gegenüber der Welle 4 abzudichten. Bei den O-Ringen 6, 8 handelt es sich insbesondere um solche, die gegen eine explosionsartige Zerstörung bei Dekompression beständig sind.

Die Gleitringe 5, 7 haben gegenüberliegende, zumindest im wesentlichen radiale Dichtflächen 9 bzw. 10, die mittels einer Federvorspanneinrichtung 14 in Anlage miteinander vorgespannt sind. Als Vorspanneinrichtung ist eine Tellerfederanordnung 14 vorgesehen, die sich einerseits am Mitnehmergehäuse 11 und andererseits am rotierenden Gleitring 7 abstützt und diesen gegen den drehfesten Gleitring 5 federnd andrückt.

Zur drehfesten Verbindung des Mitnehmergehäuses 11 mit der Welle 4 hat eine Wellendurchtrittsöffnung im Mitnehmergehäuse 11 einen nicht kreisrunden, z.B. vieleckigen Querschnitt, an den ein entsprechend konfigurierter Bereich der Welle 4 angepaßt ist, so daß zwischen der Welle 4 und der Wellendurchtrittsöffnung des Mitnehmergehäuses 11 eine drehmomentübertragender Formschluß zustande kommt, wenn das Mitnehmergehäuse 11 auf die Welle 4 aufgeschoben bzw. aufgesteckt wird.

Erfindungsgemäß bestehen beide Gleitringe 5, 7 aus verschleißfesten unterschiedlichen Sinterhartmaterialien mit jeweils hoher Steifigkeit. Eine bevorzugte Paarung ist ein Siliziumkarbid(SiC)-Sinterhartmaterial für einen der Gleitringe 5, 7 und ein Wolframkarbid(WC)-Sinterhartmaterial für den anderen Gleitring. Die Steifigkeit derartiger Hartmaterialien liegt zwischen 30x10⁴ und 60x10⁴ N/mm².

Bei der vorliegenden Ausführungsform der Erfindung ist vorgesehen, daß der drehfeste Gleitring 5 aus dem SiC-Sinterhartmaterial und der rotierende Gleitring 7 aus dem WC-Sinterhartmaterial gebildet ist. Wenn erwünscht, könnten die Sinterhartmaterialien für den drehfesten Gleitring 5 und den rotierenden Gleitring 7 auch vertauscht sein.

Vorzugsweise handelt es sich bei dem SiC-Sinterhartmaterial um ein reaktionsgesintertes Material mit folgender Zusammensetzung: SiC zwischen 85 und 90 Gew.%, freies Si zwischen 9 und 14 Gew.%. Höchstvorzugsweise betragen die Anteile: SiC ca. 87,5 Gew.%, freies Si ca. 11,5 Gew.%. Sofern ein Rest verbleibt, sollte es sich um Kohlenstoff C mit einem Anteil kleiner 0,1 Gew.% handeln.

Bevorzugtes WC-Sinterhartmaterial ist ein solches mit Nickel(Ni)-Bindung und folgender Zusammensetzung: WC zwischen 93 und 95 Gew.%; Ni zwischen 5 und 7 Gew.%; sowie ggf. Restanteile an sonstigen Materialien. Höchstvorzugsweise umfaßt das Ni-gebundene WC-Sinterhartmaterial ca. 93 Gew.% WC; ca. 6 Gew.% Ni; ca. 0,5 Gew.% Kobalt (Co); sowie Restanteile von ca. 0,5 Gew.% an sonstigen Materialien.

Derartige Sinterhartmaterialien sind dem Fachmann grundsätzlich bekannt, so daß sich eine nähere Erläuterung ihres Aufbaus und der Herstellung erübrigt.

Obwohl beide Sinterhartmaterialien eine große Härte im Vergleich z.B. zu einem Kohlenstoffmaterial besitzen, wurde festgestellt, daß eines der Sinterhartmaterialien eine wesentlich größere Härte aufweisen soll als das andere. Die bevorzugte Härte, gemessen nach der Vickersskala HV 10, sollte für eines der Sinterhartmaterialien zwischen etwa 2300 und 2500 und für das andere zwischen etwa 1300 und 1500 liegen. Daraus ergeben sich Verhältnisse der Härten zueinander, die im Bereich von etwa 1,4 bis 1,8 liegen.

Es wurde außerdem festgestellt, daß die mittlere Korngröße eines der Sinterhartmaterialien, gemessen an der Dichtfläche 9 bzw. 10 der Gleitringe 5, 7, zwischen etwa 1 und 5 µm, vorzugsweise zwischen 2 und 4 µm, höchstvorzugsweise zwischen 2 und 3,5 µm, und die des anderen Sinterhartmaterials zwischen 10 und 70 µm, vorzugsweise zwischen 40 und 50 µm, höchstvorzugsweise etwa 50 µm betragen soll. Bei dem Sinterhartmaterial mit der größeren Kornabmessung wird es sich im allgemeinen um das SiC-Sinterhartmaterial handeln.

### Beispiel

Eine Gleitringdichtung zum Einbau in eine Gehäusebohrung mit einem Nenndurchmesser von 20 mm für die Abdichtung einer Welle mit einem Durchmesser von 12 mm und folgenden Aufbaumerkmalen wurde auf Leckage geprüft:

Stationärer Gleitring 5: Reaktionsgesintertes SiC-Sinterhartmaterial mit einer Härte von 2300 HV 10, einem E-Modul von 38x10⁴ N/mm² und einer mittleren Korngröße von 50 µm. Das SiC-Sinterhartmaterial enthielt 87,5 Gew.% SiC, 11,5 Gew.% freies Si, ca. 0,1 Gew.% C.

Rotierender Gleitring 7: Ni-gebundenes WC-Sinterhartmaterial mit einer Härte von 1390 HV 10, einem E-Modul von 59x10⁴ N/mm² und einer mittleren Korngröße von 2 bis 3,5 µm. Das WC-Sinterhartmaterial enthielt 93,1 Gew.% WC, 6,0 Gew.% Ni, 0,5 Gew.% Co, 0,4 Gew.% sonstige Anteile.

Das Verhältnis der Härten der beiden Gleitringe zueinander beträgt dabei etwa 1,6.

Abzudichtendes Medium: CO₂-Öl-Gemisch mit einem Ölanteil von ca. 40%, Rest CO₂.

Beim Prüfbetrieb wurde während der Anfahrphase zwischen den Dichtflächen der Gleitringe ein Ölfilm festgestellt, der nach einer gewissen Einlaufzeit durch einen CO₂-Film ersetzt oder ergänzt wurde. Bei Prüfdrücken bis 60 bar und Drehzahlen bis 8000 min⁻¹ betrug die Leckage an Öl weniger als 1 g/400h und die Leckage an CO₂ weniger als 50 g/400h. Der Verschleiß an den Dichtflächen der Gleitringe war minimal.

## Patentansprüche

1. Abdichtung der Antriebswelle eines CO₂-Kältemittelverdichters gegenüber dem ein CO₂-Ölgemisch enthaltenden Verdichtergehäuse mit einer Gleitringdichtung, die ein Paar Gleitringe aufweist, von denen einer drehfest am Verdichtergehäuse und der andere drehfest an der Antriebswelle montierbar ist, und deren zusammenwirkende Dichtflächen bei Betrieb zwischen sich einen Dichtspalt bilden,
**dadurch gekennzeichnet,**
daß beide Gleitringe (5,7) aus Sinterhartmaterial gefertigt sind und daß das Verhältnis der Härte des einen Sinterhartmaterials zu der Härte des anderen Sinterhartmaterials zwischen etwa 1,8 und 1,4 beträgt.

2. Abdichtung nach Anspruch 1, **dadurch gekennzeichnet**, daß die Dichtflächen (10, 9) der Gleitringe (5,7) bei Betrieb ständig im Mischreibungsbereich betreibbar sind.

3. Abdichtung nach Anspruch 1 oder 2, **dadurch gekennzeichnet**, daß ein Gleitring (5,7) aus einem Wolframkarbid(WC)-Sinterhartmaterial und der andere Gleitring (7,5) aus einem Siliziumkarbid(SiC)-Sinterhartmaterial gebildet ist.

4. Abdichtung nach Anspruch 3, **dadurch gekennzeichnet**, daß das WC-Sinterhartmaterial Nickel(Ni)-gebunden ist mit einem Anteil an Ni zwischen 5 und 7, vorzugsweise 6 Gew.%, und einem Anteil WC zwischen 93 und 95 Gew.%.

5. Abdichtung nach Anspruch 3 oder 4, **dadurch gekennzeichnet**, daß das SiC-Sinterhartmaterial reaktionsgesintert ist mit Anteilen an freiem Si zwischen 9 und 14, vorzugsweise etwa 11,5 Gew.%, SiC zwischen 85 und 90, vorzugsweise etwa 87,5 Gew.%, und einem Kohlenstoff(C)-Rest von höchstens 0,1 Gew.%.

6. Abdichtung nach einem der vorherigen Ansprüche, **dadurch gekennzeichnet**, daß die mittlere Korngröße des einen Sinterhartmaterials zwischen etwa 1 und 5 µm, vorzugsweise zwischen 2 und 4 µm, und die mittlere Korngröße des anderen Sinterhartmaterials zwischen etwa 10 und 70 µm, vorzugsweise zwischen 40 und 50 µm, liegt.

7. Abdichtung nach Anspruch 6, **dadurch gekennzeichnet,** daß die mittlere Korngröße des einen Sinterhartmaterials zwischen etwa 2 und 3,5 µm und die mittlere Korngröße des anderen Sinterhartmaterials etwa 50 µm beträgt.

8. Abdichtung nach einem der vorherigen Ansprüche, **dadurch gekennzeichnet**, der rotierende Gleitring (7) aus dem WC-Sinterhartmaterial gebildet ist.

9. Kältemittelverdichter mit einer Antriebswelle, die gegenüber dem ein Gas-Ölgemisch enthaltenden Verdichtergehäuse durch eine Gleitringdichtung abgedichtet ist, wobei die Gleitringdichtung ein Paar Gleitringe aufweist, von denen einer drehfest am Verdichtergehäuse und der andere drehfest an der Antriebswelle montierbar ist, und deren zusammenwirkende Dichtflächen bei Betrieb zwischen sich einen Dichtspalt bilden,
**dadurch gekennzeichnet,**
daß beide Gleitringe (5,7) aus Sinterhartmaterial gefertigt sind und daß das Verhältnis der Härte des einen Sinterhartmaterials zu der Härte des anderen Sinterhartmaterials zwischen etwa 1,8 und 1,4 beträgt.

## Claims

1. A seal for the drive shaft of a CO₂ refrigeration compressor in relation to the compressor casing containing a CO₂-oil mixture, having a slide ring sealing comprising a pair of slide rings, one of which can be mounted non-rotatably on the compressor casing and the other non-rotatably on the drive shaft, their co-operating sealing faces forming a sealing gap between themselves during operation,
**characterised in that** the two slide rings (5, 7) are made from sintered hard material, the ratio of hardness as between one sintered hard material and the other being between approximately 1.8 and 1.4.

2. A seal according to claim 1,
**characterised in that** the sealing faces (10, 9) of the slide rings (5, 7) can always be operated in the mixed friction range during operation.

3. A seal according to claims 1 or 2,
**characterised in that** a slide ring (5, 7) is made from a tungsten carbide (TC) sintered hard material, the other slide ring (7, 5) being made from a silicon carbide (SiC) sintered hard material.

4. A seal according to claim 3,
**characterised in that** the TC sintered hard material is bonded to nickel (Ni), with a proportion of Ni between 5 and 7, preferably 6% by weight, and a proportion of TC between 93 and 95% by weight.

5. A seal according to claims 3 or 4,
**characterised in that** the SiC sintered hard material is reaction sintered with proportions of free Si between 9 and 14, preferably approximately 11.5% by weight, SiC between 85 and 90, preferably approximately 87.5% by weight and a maximum carbon (C) residue of 0.1% by weight.

6. A seal according to one of the preceding claims,
**characterised in that** the mean grain size of one sintered hard material is between approximately 10 and 5 µm, preferably between 2 and 4 µm, the mean grain size of the other sintered hard material being between approximately 10 and 70 µm preferably between 40 and 50 µm.

7. A seal according to claim 6,
**characterised in that** the mean grain size of one sintered hard material is between 2 and 3.5 µm, the mean grain size of the other sintered hard material being approximately 50 µm.

8. A seal according to one of the preceding claims,
**characterised in that** the rotating slide ring (7) is made from the TC sintered hard material.

9. A refrigeration compressor having a drive shaft which is sealed by a slide ring sealing from the compressor casing containing a gas-oil mixture, the slide ring sealing comprising a pair of slide rings, one of which can be mounted non-rotatably on the compressor casing and the other non-rotatably on the drive shaft, their co-operating sealing faces forming between themselves a sealing gap during operation,
**characterised in that** the two slide rings (5, 7) are made from sintered hard material, the ratio of hardness as between one sintered hard material and the other being between approximately 1.8 and 1.4.

## Revendications

1. Etanchéification de l'arbre moteur d'un compresseur à fluide frigorigène CO₂ par rapport au carter de compresseur contenant un mélange CO₂-huile, avec une garniture d'étanchéité. à anneau glissant qui présente une paire d'anneaux de glissement, dont l'un peut être monté fixe en rotation sur le carter de compresseur et l'autre fixe en rotation sur l'arbre moteur et dont les surfaces d'étanchéité coopérantes forment entre elles, en fonctionnement, une fente d'étanchéité,
caractérisée en ce que les deux anneaux de glissement (5,7) sont fabriqués en matériau dur fritté et que le rapport de la dureté d'un matériau dur fritté à la dureté de l'autre matériau dur fritté est compris entre sensiblement 1,8 et 1,4.

2. Etanchéification selon la revendication 1,
caractérisée en ce que les surfaces d'étanchéité (10,9) des anneaux de glissement (5,7), en fonctionnement, peuvent être opérées en permanence dans la zone de frottement de mélange.

3. Etanchéification selon la revendication 1 ou 2,
caractérisée en ce qu'un anneau de glissement (5,7) est formé en un matériau dur fritté en carbure de tungstène (WC) et l'autre anneau de glissement (7,5) en un matériau dur fritté en carbure de silicium (Si C).

4. Etanchéification selon la revendication 3,
caractérisée en ce que le matériau dur fritté en WC est lié à du nickel (Ni) avec une teneur en Ni entre 5 et 7, de préférence 6 %, en poids, et une teneur en WC entre 93 et 95 % en poids.

5. Etanchéification selon la revendication 3 ou 4,
caractérisée en ce que le matériau dur fritté est fritté en réaction avec des teneurs en Si libre entre 9 et 14, de préférence environ 11,5 %, en poids, en Si C entre 85 et 90, de préférence environ 87,5 %, en poids, et un reste carbone (C) d'au plus 0,1 % en poids.

6. Etanchéification selon l'une des revendications précédentes,
caractérisée en ce que la grosseur de grain moyenne de l'un des matériaux durs frittés est entre environ 1 et 5 µm, de préférence entre 2 et 4 µm, et la grosseur de grain moyenne de l'autre matériau dur fritté entre 10 et 70 µm, de préférence entre 40 et 50 µm.

7. Etanchéification selon la revendication 6,
caractérisée en ce que la grosseur de grain moyenne de l'un des matériaux durs frittés est entre environ 2 et 3,5 µm et la grosseur de grain moyenne de l'autre matériau dur fritté d'environ 50 µm.

8. Etanchéification selon l'une des revendications précédentes,
caractérisée en ce que l'anneau de glissement (7) rotatif est formé dans le matériau dur fritté en WC.

9. Compresseur à fluide frigorifique avec un arbre moteur qui est étanché par rapport au carter de compresseur contenant un mélange gaz-huile, par une garniture d'étanchéité à anneau glissant, la garniture d'étanchéité à anneau glissant présentant une paire d'anneaux de glissement, dont l'un peut être monté fixe en rotation sur le carter de compresseur et l'autre fixe en rotation sur l'arbre moteur et dont les surfaces d'étanchéité coopérantes forment entre elles, en fonctionnement, une fente d'étanchéité,
caractérisé en ce que les deux anneaux de glissement (5,7) sont fabriqués en matériau dur fritté et que le rapport de la dureté d'un matériau dur fritté à la dureté de l'autre matériau dur fritté est compris entre sensiblement 1,8 et 1,4.
